# EUROPEAN PATENT APPLICATION

(11) **EP 3 936 456 A1**
(43) Date of publication of application: **12.01.2022**
(21) Application number: 21184912.0
(22) Date of filing: 09.07.2021
(51) Int. Cl.: B65D 65/46, B65D 77/00, B65D 81/26, B65D 85/30

(54) **COMPOSTABLE FOOD PACKAGING SYSTEM AND METHOD**

(30) Priority: 10.07.2020 US 202063050519 P
(71) Applicant: New Frontier Foods Inc., Burlingame CA 94010-4003 (US)
(72) Inventor: MOCK,, Robert, Hillsborough, 94010 (US)
(74) Representative: Potter Clarkson

(57) **Abstract**

A compostable packaging system for seaweed snacks and other brittle food products and methods for making and utilizing the same. The compostable packaging system can include a support apparatus and a moisture-absorbing apparatus. The support apparatus and the moisture-absorbing apparatus with at least one food product can be disposed within a container, which is then sealed. The support apparatus can help to prevent the food product from breaking or other damage; whereas, the moisture-absorbing apparatus can absorb any moisture within the sealed container and otherwise help to maintain the food product in a dry and otherwise viable condition. The compostable packaging system advantageously can be fully compostable or otherwise biodegradable and thereby can result in zero waste.

## Description

### CROSS- REFERENCE TO RELATED APPLICATIONS

This application claims the benefit of, and priority to, United States Provisional Application Serial No. 63/050,519, filed July 10, 2020, the disclosure of which is hereby incorporated herein by reference in its entirety and for all purposes.

### FIELD

The disclosed embodiments relate generally to the field of packaging and more particularly, but not exclusively, to compostable packaging systems and methods for seaweed snacks and other brittle food products.

### BACKGROUND

Forming containers for beverages, shampoo and other common consumer products, plastics are nearly impossible to avoid and are a rapidly growing segment of municipal solid waste. More than three-quarters of all non-degradable plastic waste ends up in landfills. If this trend continues, the plastic waste will more than double by the year 2050.

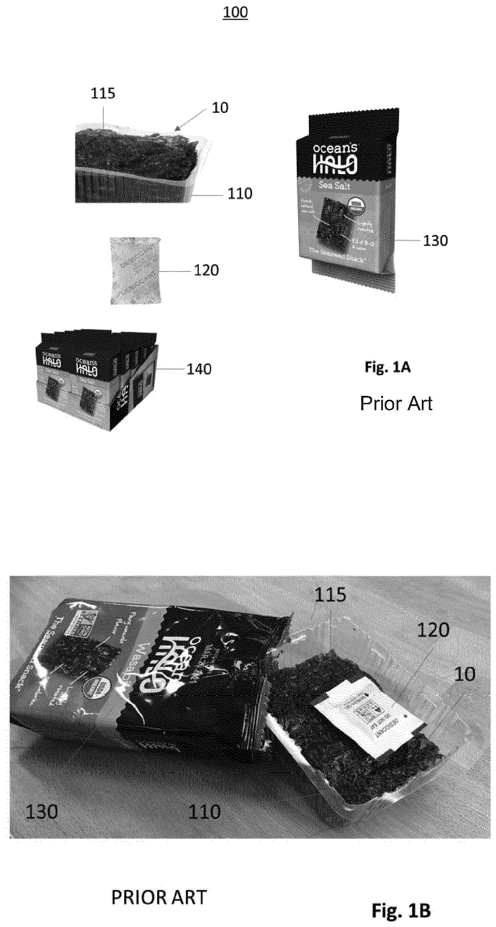

Conventional food packaging systems 100, for example, include a plastic tray 110 as illustrated in Figs. 1A-B. The plastic tray 110 typically comprises a tub-shaped tray that defines an internal chamber 115 into which a food product 10 can be placed and retained. Once the food product 10 is disposed in the internal chamber 115, the plastic tray 110 is placed in a plastic bag 130 for shipment. Depending upon the nature of the food product 10, conventional desiccant 120 can be placed in the bag 130 with the plastic tray 110 for keeping the food product 10 dry and otherwise viable. The bag 130 then is sealed and placed in a conventional case 140 for shipment and, upon delivery to a store, display on a retail shelf or other consumer-accessible location within the store.

Comprising plastic, desiccant and other non-degradable components, these conventional food packaging systems 100 often end up landfills and thereby contribute to the mounting municipal solid waste problem.

In view of the foregoing, a need exists for a compostable packaging system and method for seaweed snacks and other brittle food products that overcome the aforementioned obstacles and deficiencies of currently-available food packaging systems 100.

### SUMMARY

The present disclosure relates to a compostable packaging system for seaweed snacks and other brittle food products and methods for making and utilizing the same. The compostable packaging system advantageously can be fully composable and/or protect the food product from breakage during transit and/or storage. In accordance with a first aspect disclosed herein, there is set forth a compostable packaging system that can comprise:
a support means for supporting the food product and comprising a first compostable material;
a moisture-absorbing means for absorbing moisture adjacent to the food product and comprising a second compostable material; and
a composable film bag defining an internal chamber for receiving and enclosing the support means, the moisture-absorbing means and the food product,
wherein the compostable packaging system is fully composable and/or protects the food product from breakage during transit and/or storage.

In some embodiments of the disclosed compostable packaging system of the first aspect, the moisture-absorbing means can comprise a compostable desiccant material. The second compostable material of the moisture-absorbing means, in other words, can include a compostable desiccant material.

In some embodiments of the disclosed compostable packaging system of the first aspect, the first compostable material of the support means comprises a plant fiber material and/or a natural clay. The support means optionally can comprise a stiff support means.

In some embodiments of the disclosed compostable packaging system of the first aspect, the support means can be disposed in a card configuration. The support means, for example, can have a length of four inches, a width of three inches and/or can have a dimension that is based upon a corresponding dimension of the food product. Additionally and/or alternatively, the support means can have a first surface for supporting the food product and a second surface for coupling with the moisture-absorbing means, wherein the second surface optionally is opposite the first surface. A dimension of the moisture-absorbing means can be less than a corresponding dimension of the support means.

In some embodiments of the disclosed compostable packaging system of the first aspect, the moisture-absorbing means can comprise a moisture-absorbing layer of the support means. The moisture-absorbing layer, for example, can be disposed between a pair of outer layers of the support means. Each of the outer layers of the support means optionally can comprise a coating of polylatic acid formed on the moisture-absorbing layer.

In some embodiments of the disclosed compostable packaging system of the first aspect, the support means can support the food product along a width of the food product, along a length of the food product, or both.

In some embodiments of the disclosed compostable packaging system of the first aspect, the support means can be configured to support an edible seafood food product, an edible nori food product or both.

In some embodiments of the disclosed compostable packaging system of the first aspect, the moisture-absorbing means can include a compostable pouch for enclosing the second compostable material.

In some embodiments of the disclosed compostable packaging system of the first aspect, the second compostable material can comprise a non-silica material.

In accordance with a second aspect disclosed herein, there is set forth a method for protecting a brittle food product during transit and/or storage that can comprise:
supporting the food product via a support means comprising a first compostable material;
disposing a moisture-absorbing means comprising a second compostable material for absorbing moisture adjacent to the food product; and
enclosing the support means, the moisture-absorbing means and the food product within a composable film bag,
wherein the support means, the moisture-absorbing means and the composable film bag are fully composable.

In some embodiments of the disclosed method of the second aspect, the moisture-absorbing means can comprise a moisture-absorbing layer within the support means.

In accordance with a third aspect disclosed herein, there is set forth a method for manufacturing compostable packaging for a brittle food product that can comprise:
coupling a moisture-absorbing means for absorbing moisture adjacent to the food product with a first surface of a compostable support means, the moisture-absorbing means comprising a compostable material;
disposing the food product on a second surface of the compostable support means being opposite the first surface; and
enclosing the compostable support means, the moisture-absorbing means and the food product within an internal chamber of a composable film bag,
wherein the compostable packaging system is fully composable and/or protects the food product from breakage during transit and/or storage.

In some embodiments of the disclosed method of the third aspect, the coupling the moisture-absorbing means can comprise disposing a moisture-absorbing layer within the compostable support means and coating the moisture-absorbing layer with polylatic acid.

### BRIEF DESCRIPTION OF THE DRAWINGS

Figs. 1A-B are drawings illustrating a conventional food packaging system.
Fig. 2 is a detail diagram illustrating an exemplary embodiment of a compostable packaging system.
Figs. 3A-C are detail diagrams illustrating exemplary alternative embodiments of the compostable packaging system of Fig. 2, wherein the compostable packaging system is configured to receive a seaweed snack and other brittle food product.
Figs. 4A-D are detail diagrams for illustrating selected advantages of the compostable packaging system of Fig. 2.
Fig. 5 is a detail diagram illustrating another exemplary alternative embodiment of the compostable packaging system of Fig. 2, wherein the compostable packaging system includes a multi-layered support apparatus.

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

### DETAILED DESCRIPTION OF THE PREFERRED EMBODIMENTS

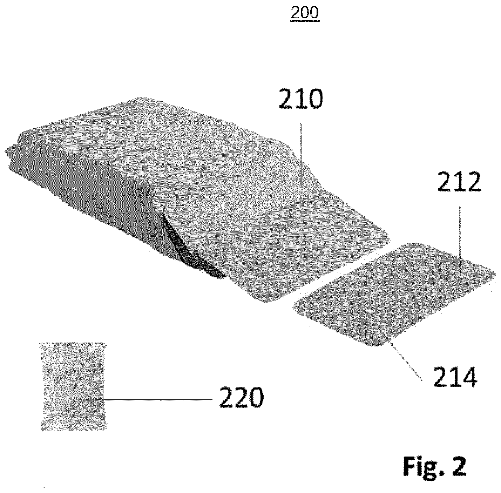

Since currently-available food packaging systems comprise plastic, desiccant and other non-degradable components, often end up landfills and contribute to the mounting municipal solid waste problem, a compostable packaging system and method can prove desirable and provide a basis for a wide range of applications, such as for packaging seaweed snacks and other brittle food products. This result can be achieved, according to one embodiment disclosed herein, by a compostable packaging system 200 as illustrated in Fig. 2.

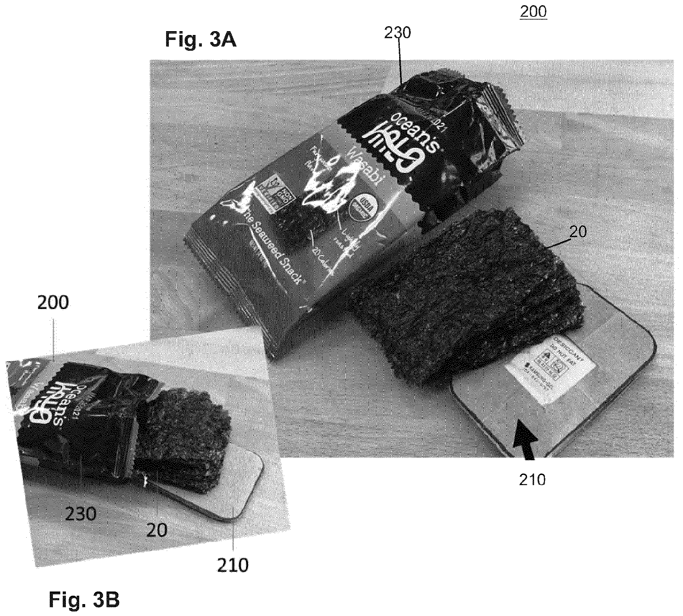

Turning to Fig. 2, the compostable packaging system 200 can include a support apparatus 210. The support apparatus 210 can be formed from a compostable material, such as a plant fiber material, without limitation. Advantageously, the support apparatus 210 can be configured to support a food product 20 (shown in Figs. 3A-C). Stated somewhat differently, the support apparatus 210 can comprise a stiff support member (or means) for supporting the food product 20.

A selected first surface 212 of the support apparatus 210 can abut the brittle food product 20 and provide physical support along a length and/or a width of the food product 20. If the food product 20 comprises an elongated or otherwise brittle food product, for example, the support apparatus 210 provide physical support for the food product 20 to help prevent crumbling, breaking or other damage to the food product 20 while disposed within the compostable packaging system 200, such as during transit and/or storage.

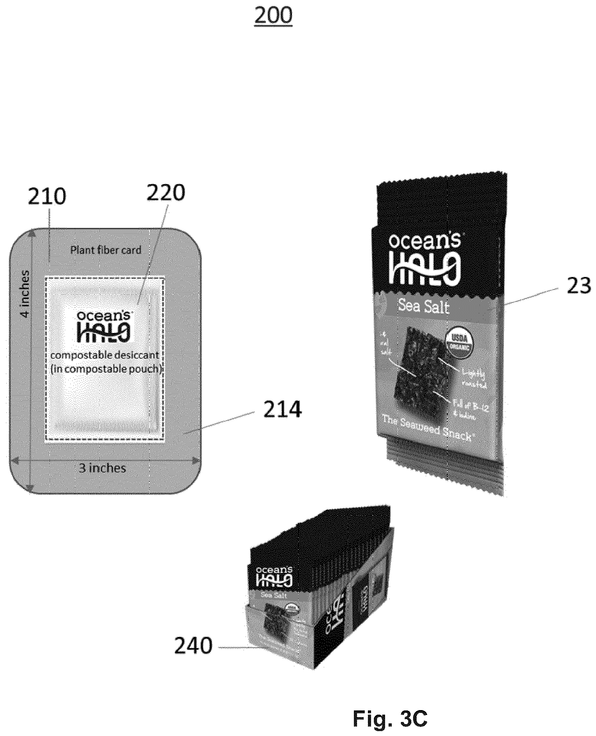

The support apparatus 210 optionally can be provided in a card configuration with a predetermined length, width, depth, shape or other dimension. In selected embodiments, one or more of the dimensions of the support apparatus 210 can be based upon a size, shape, nature or other feature of the food product 20. When configured for use with an edible seaweed snack, a nori snack and other brittle food product 20, for example, the support apparatus 210 can have a width of three inches and a length of four inches as illustrated in Fig. 3C. Additionally and/or alternatively, the predetermined length, width, depth, shape or other dimension of the support apparatus 210 can be equal to a length, width, depth, shape or other dimension of a standard credit card.

Additionally and/or alternatively, the compostable packaging system 200 can include a moisture-absorbing apparatus 220. The moisture-absorbing apparatus 220 can absorb any moisture adjacent to the food product 20 during storage and/or transit and/or can comprise a compostable desiccant material, such as a non-silica material, without limitation. In selected embodiments, the compostable desiccant material can be disposed within a compostable pouch or other container.

The moisture-absorbing apparatus 220 can be separate from, and/or at least partially integrated with, the support apparatus 210. As illustrated in Fig. 3C, for example, the moisture-absorbing apparatus 220 can couple with a selected second surface 214 of the support apparatus 210. The selected second surface 214 can be the same as the selected first surface 212 or, as shown in Fig. 3C, opposite the selected second surface 214. The moisture-absorbing apparatus 220 can have any suitable length, width, depth, shape or other dimension, which can be less than, equal to and/or greater than the predetermined length, width, depth, shape or other dimension of the support apparatus 210.

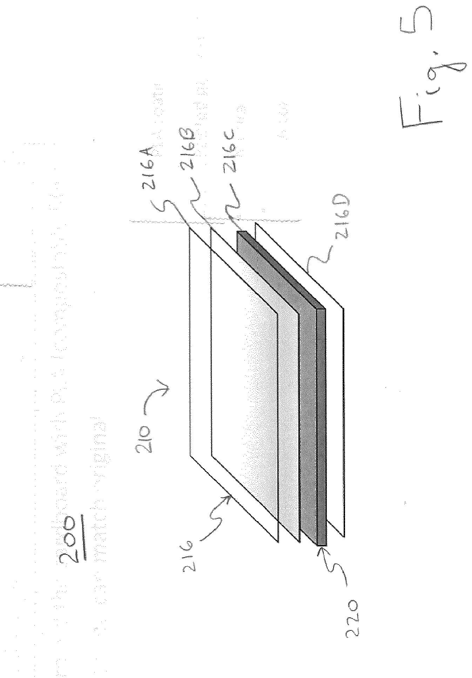

Additionally and/or alternatively, the support apparatus 210 can comprise a multilayered the support apparatus that integrates the moisture-absorbing apparatus 220. Turning to Fig. 5, for example, the support apparatus 210 is shown as comprising a plurality of layers 216. The support apparatus 210 can form a stiff cardboard support member (or means) for supporting the food product 20 (shown in Fig. 2A). The support apparatus 210 can have the predetermined length, width, depth, shape or other dimension in the manner discussed above with reference to Figs. 3A-C.

The moisture-absorbing apparatus 220 can comprise a moisture-absorbing layer 216C of the support apparatus 210 and advantageously can be formed from natural clay. The moisture-absorbing layer 216C can be disposed between a pair of outer support layers 216A, 216D. Stated somewhat differently, the moisture-absorbing layer 216C can be coated with the outer support layers 216A, 216D. The outer support layers 216A, 216D can comprise a compostable film. In selected embodiments, the outer support layers 216A, 216D can be formed from a polylatic acid (PLA).

In selected embodiments, visual indicia, such as textual information and/or pictorial information, can be included in the moisture-absorbing apparatus 220. Exemplary visual indica can include, but is not limited to, information about the support apparatus 210. In other words, the visual indica can present information related to the moisture-absorbing apparatus 220, such as the natural clay, and/or warmings or other information about the support apparatus 210. The visual indicia, for example, can be etched into the stiff cardboard support member of the moisture-absorbing apparatus 220. As shown in Fig. 5, the support apparatus 210 can include an optional informational layer 216B. The informational layer 216B can be disposed between the moisture-absorbing layer 216C and one of the outer support layers 216A, 216D.

Although shown and described with reference to Figs. 2 and 5 as including one support apparatus 210 and one moisture-absorbing apparatus 220 for purposes of illustration only, the compostable packaging system 200 can include any predetermined number of support apparatuses 210 and/or moisture-absorbing apparatuses 220, without limitation. The predetermined number of support apparatuses 210 and/or moisture-absorbing apparatuses 220 can depend, for example, upon the size, shape, nature or other feature of the food product 20.

In use, the support apparatus 210 and the moisture-absorbing apparatus 220 along with the food product 20 can be disposed within a container 230 as illustrated in Figs. 3A-B. The container 230, for example, can comprise a compostable or otherwise biodegradable film bag. The container 230 can provide suitable internal dimensions for receiving one or more of the food product 20 with the support apparatus 210 and the moisture-absorbing apparatus 220.

The container 230 preferably can provide an air-tight seal, enclosing the support apparatus 210, the moisture-absorbing apparatus 220 and the food product 20, and can protect the food product 20 during storage and/or transit. The moisture-absorbing apparatus 220 advantageously can absorb any moisture within the sealed container 230 and otherwise help to maintain the food product 20 in a dry and otherwise viable condition.

The compostable packaging system 200 advantageously can provide a 100% compostable packaging. In other words, the support apparatus 210, the moisture-absorbing apparatus 220 and the container 230 each can be fully compostable or otherwise biodegradable. The compostable packaging system 200 thus can result in zero waste and not contribute to the mounting municipal solid waste problem.

Optionally, one or more of the containers 230 with the enclosed support apparatus 210, moisture-absorbing apparatus 220 and food product 20 each can be disposed in a case 240 as illustrated in Fig. 3C. The case 240 can utilized for shipping the enclosed containers 230 to a retail establishment (not shown) and/or for displaying the enclosed containers 230 on a retail shelf or other consumer-accessible location within the retail establishment.

Further advantages of the compostable packaging system 200 can include that the container 230 can be provided with a reduced size, shape, cross-section or other dimension when compared to conventional food packaging systems 100 (shown in Figs. 1A-B). In selected embodiments, the compostable packaging system 200 can have a dimension that is twenty-five percent or less of the conventional food packaging systems 100. With reduced dimensions, the compostable packaging system 200 can permit a larger number of containers 230 to be enclosed in the case 240 and thereby enable a larger quantity of the food product 20 to be shipped and/or displayed via the compostable packaging system 200. In some embodiments, the containers 230 can be one-quarter of the size of a typical conventional food packaging systems such that four times more product can be shipped and/or displayed via the compostable packaging system 200.

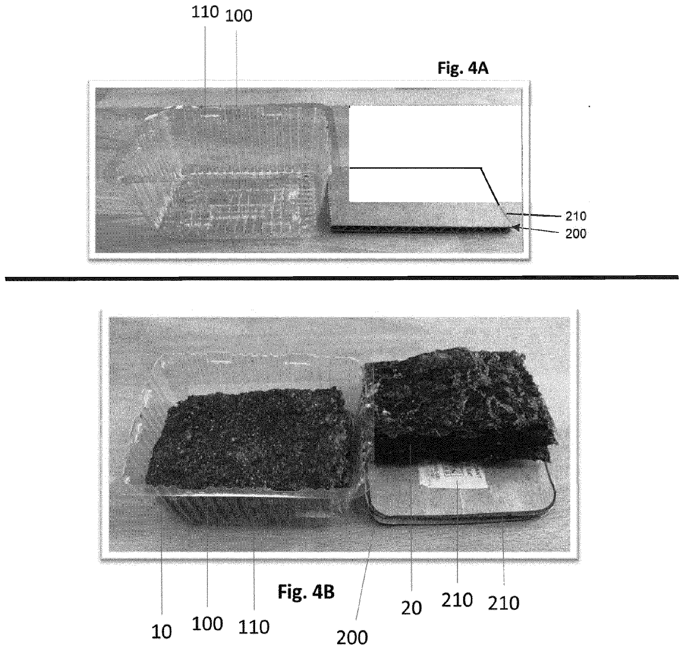

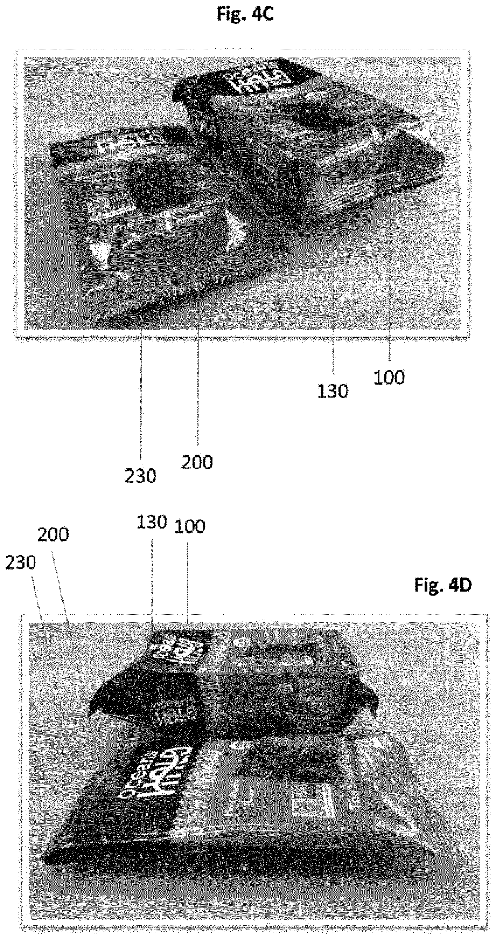

Selected advantages of the reduced dimension of the compostable packaging system 200 relative to the conventional food packaging system 100 are illustrated in Figs. 4A-D. Turning to Fig. 4A, for example, the support apparatus 210 is shown as having a much shallower depth than the plastic tray 110 of the conventional food packaging system 100. Fig. 4B illustrates that an amount of the food product 20 that can be accommodated by the compostable packaging system 200 can be the same as an amount of the food product 10 that can be accommodated by the conventional food packaging system 100. As shown in Figs. 4C and 4D, the thickness of the container 230 is much less than the thickness of the plastic bag 130 of the conventional food packaging system 100.

Additionally and/or alternatively, the reduced dimension of the compostable packaging system 200 can reduce the carbon footprint associated with shipping the food product 20, reduce a unit cost for shipping the food product 20 and/or permit additional food product 20 to be displayed at within a predetermined shelf size at the retail shelf within the retail establishment.

As used herein, a phrase in the form of at least one of A, B, C and D herein is to be construed as meaning one or more of A, one or more of B, one or more of C and/or one or more of D.

The disclosed embodiments are susceptible to various modifications and alternative forms, and specific examples thereof have been shown by way of example in the drawings and are herein described in detail. It should be understood, however, that the disclosed embodiments are not to be limited to the particular forms or methods disclosed, but to the contrary, the disclosed embodiments are to cover all modifications, equivalents, and alternatives.

## Claims

1. A compostable packaging system for a brittle food product, comprising:
a support means for supporting the food product and comprising a first compostable material;
a moisture-absorbing means for absorbing moisture adjacent to the food product and comprising a second compostable material; and
a composable film bag defining an internal chamber for receiving and enclosing said support means, said moisture-absorbing means and the food product,
wherein the compostable packaging system is fully composable and/or protects the food product from breakage during transit and/or storage.

2. The compostable packaging system of claim 1, wherein the second compostable material of said moisture-absorbing means comprises a compostable desiccant material.

3. The compostable packaging system of claim 1 or claim 2, wherein the first compostable material of said support means comprises a plant fiber material or a natural clay.

4. The compostable packaging system of any one of the above claims, wherein said support means comprises a stiff support means.

5. The compostable packaging system of any one of the above claims, wherein said support means is disposed in a card configuration.

6. The compostable packaging system of claim 5, wherein said support means has a length of four inches and/or a width of three inches.

7. The compostable packaging system of claim 5 or claim 6, wherein said support means has a dimension that is based upon a corresponding dimension of the food product.

8. The compostable packaging system of any one of claims 5-7, wherein said support means has a first surface for supporting the food product and/or a second surface for coupling with said moisture-absorbing means.

9. The compostable packaging system of claim 8, wherein the second surface is opposite the first surface.

10. The compostable packaging system of claim 8 or claim 9, wherein a dimension of said moisture-absorbing means is less than a corresponding dimension of said support means.

11. The compostable packaging system of any one of claims 5-10, wherein said moisture-absorbing means comprises a moisture-absorbing layer of said support means.

12. The compostable packaging system of claim 11, wherein
the moisture-absorbing layer is disposed between a pair of outer layers of said support means or
the moisture-absorbing layer is disposed between a pair of outer layers of said support means wherein each of the outer layers of said support means comprises a coating of polylatic acid formed on the moisture-absorbing layer.

13. The compostable packaging system of any one of the above claims, wherein said support means supports the food product along a width of the food product, along a length of the food product, or both.

14. The compostable packaging system of any one of the above claims, wherein said support means is configured to support an edible seafood food product, an edible nori food product or both.

15. The compostable packaging system of any one of the above claims, wherein said moisture-absorbing means includes a compostable pouch for enclosing the second compostable material.

16. The compostable packaging system of any one of the above claims, wherein the second compostable material comprises a non-silica material.

17. A method for protecting a brittle food product during transit and/or storage, comprising:
supporting the food product via a support means comprising a first compostable material;
disposing a moisture-absorbing means comprising a second compostable material for absorbing moisture adjacent to the food product; and
enclosing the support means, the moisture-absorbing means and the food product within a composable film bag,
wherein the support means, the moisture-absorbing means and the composable film bag are fully composable.

18. The method of claim 17, wherein the moisture-absorbing means is a moisture-absorbing layer within the support means.

19. A method for manufacturing compostable packaging for a brittle food product, comprising:
coupling a moisture-absorbing means for absorbing moisture adjacent to the food product with a first surface of a compostable support means, the moisture-absorbing means comprising a compostable material;
disposing the food product on a second surface of the compostable support means being opposite the first surface; and
enclosing the compostable support means, the moisture-absorbing means and the food product within an internal chamber of a composable film bag,
wherein the compostable packaging system is fully composable and/or protects the food product from breakage during transit and/or storage.

20. The method of claim 19, wherein said coupling the moisture-absorbing means comprises disposing a moisture-absorbing layer within the compostable support means and coating the moisture-absorbing layer with polylatic acid.
